Europäisches Patentamt

European Patent Office

Office européen des brevets

(11) Veröffentlichungsnummer: **0 513 735 A2**

## (12) EUROPÄISCHE PATENTANMELDUNG

(21) Anmeldenummer: **92107985.1**

(22) Anmeldetag: **12.05.92**

(51) Int. Cl.⁵: **B23Q 16/10**

(30) Priorität: **15.05.91 DE 4115753**

(43) Veröffentlichungstag der Anmeldung:
**19.11.92 Patentblatt 92/47**

(84) Benannte Vertragsstaaten:
**CH ES FR GB IT LI**

(71) Anmelder: **Ott Maschinentechnik GmbH**
**Jägerstrasse 4-12**
**W-8960 Kempten(DE)**

(72) Erfinder: **Kettel, Hans**
**Steinbruchweg 5**
**W-8960 Kempten(DE)**
Erfinder: **Heel, Helmut**
**Andreas-Mayer-Strasse 82 1/8**
**W-8951 Lengenwang(DE)**

(74) Vertreter: **Liebau, Gerhard, Dipl.-Ing.**
**Erzgebirgsstrasse 7, Postfach 220229**
**W-8900 Augsburg(DE)**

(54) **Werkzeugrevolver.**

(57) Der Werkzeugrevolver weist ein Gehäuse (2), mit einem hierin drehbar und durch einen Motor (3) antreibbar gelagerten Revolverkopf (1) auf. Dieser ist mittels einer Verriegelungsvorrichtung (4, 5) gegenüber dem Gehäuse (2) in jeweils einer von mehreren vorbestimmten Schaltstellungen arretierbar. Der Revolverkopf (1) ist mittels einer Vorpositioniereinrichtung (6, 7, 7a) stillsetzbar. Mit dem Revolverkopf (1) ist eine Nockenscheibe (8) verbunden, die eine der Anzahl der Schaltstellungen entsprechende Anzahl von Nocken (9) mit dazwischenliegenden Nockentälern (9') aufweist. Zur Abbremsung des Revolverkopfes ist ein hydraulischer Stoßdämpfer (10) vorgesehen, welcher zeitweilig mit der Nockenscheibe (9) mittelbar oder unmittelbar zusammenwirkt. Mittels einer Steuereinrichtung (S) kann während eines ersten Teiles der Drehung des Revolverkopfes (1) der Stoßdämpfer (10) inaktiviert und während eines zweiten Teiles der Drehung kurz vor Erreichen der angewählten Schaltstellung wieder aktiviert werden.

Fig. 1

Die Erfindung betrifft einen Werkzeugrevolver, mit einem Gehäuse, mit einem hierin drehbar und durch einen Motor antreibbar gelagerten Revolverkopf, mit einer Verriegelungsvorrichtung, mittels welcher der Revolverkopf gegenüber dem Gehäuse in jeweils einer von mehreren vorbestimmten Schaltstellungen arretierbar ist, mit einer Vorpositioniereinrichtung, mittels welcher der Revolverkopf beim Erreichen einer angewählten Schaltstellung in einer das gegenseitige Eingreifen von Verriegelungteilen der Verriegelungsvorrichtung ermöglichenden Stellung (Vorposition) stillsetzbar ist, mit einer beim Stillsetzen des Revolverkopfes wirksam werdenden Dämpfungseinrichtung und mit einer Steuereinrichtung, welche kurz vor Erreichen der angewählten Schaltstellung die Vorpositioniereinrichtung aktiviert und beim Erreichen der Vorposition den Motor abschaltet.

Bei einem derartigen bekannten Werkzeugrevolver (DE 38 17 873 A1 ) weist die Vorpositioniereinrichtung einen parallel zur Drehachse entgegen Federkraft elektromagnetisch verschiebbaren Vorpositionierbolzen auf. Auf einer Antriebswelle, welche den Revolverkopf trägt, ist drehfest ein Innenring angeordnet, der konzentrisch von einem Außenring umgeben ist. Die beiden Ringe sind mit ineinandergreifenden Zähnen versehen, wobei jedoch zwischen diesen Zähnen in Umfangsrichtung sehr viel Zwischenraum vorhanden ist. In jeden Zwischenraum ist ein stabförmiges, den Zwischenraum spielfrei ausfüllendes Dämpfungselement aus einem gummielastischen Material angeordnet. Diese Dämpfungselemente lassen wie bei einer elastischen Kupplung eine gewisse Verdrehung des Außenringes relativ zum Innenring in beiden Drehtungen zu. Der Außenring ist mit einer der Anzahl der Schaltstellungen entsprechenden Anzahl von Sacklochbohrungen 28 für den Eingriff des Vorpositionierbolzens versehen. Der Motor kann über ein zwischengeschaltetes Getriebe die Antriebswelle in beiden Drehrichtungen antreiben, wobei nicht gewünschte Schaltstellungen ohne Zwischenhalt überfahren werden. Kurz bevor der Revolverkopf die angewählte Schaltstellung erreicht hat, wird durch ein entsprechendes Signal der Steuereinrichtung der elektromagnetische Antrieb des Vorpositionierbolzens aktiviert und der Vorpositionierbolzen entgegen der Federkraft in Richtung auf den Außenring bewegt. Er gleitet zunächst über die Stirnfläche des Außenringes und rastet dann in die nächste Sacklochbohrung ein. Hierdurch wird der Außenring schlagartig blockiert. Durch die Steuereinrichtung wird gleichzeitig auch der Motor abgeschaltet. Infolge der nicht unerheblichen Masse des Revolverkopfes und der von ihm getragenen Werkzeuge dreht sich jedoch der Revolverkopf weiter, wobei die stabförmigen Dämpfungselemente zusammengedrückt werden. Durch diese Zusammendrückung soll eine gewisse Dämpfungswirkung und damit eine stoßartige Belastung des Werkzeugrevolvers und der ihn umgebenden Maschinenteile vermieden werden. Da jedoch die Durchmesser der Dämpfungselemente verhältnismäßig klein sind, kann sich der Innenring gegenüber dem Außenring nur um einen sehr kleinen Drehwinkel von 2 - 3° verdrehen. Der Dämpfungsweg ist also verhältnismäßig klein, wenn man berücksichtigt, daß bei der Vorpositionierung relativ große Massen zum Stillstand gebracht werden müssen. Wegen des kleinen Dämpfungsweges werden diese großen Massen verhältnismäßig abrupt und nur mit geringer Dämpfungswirkung zum Stillstand gebracht, und es treten bei der Vorpositionierung erhebliche Stoßbelastungen auf. Da außerdem die Dämpfungselemente aus gummielastischem Material bestehen, wird die Bewegungsenergie nicht unmittelbar verzehrt, sondern in den Dämpfungselementen gespeichert. Dies bewirkt, daß sich die zusammengedrückten Dämpfungselemente wieder ausdehnen und den Revolverkopf in entgegengesetzter Drehrichtung zu drehen versuchen. Hierdurch werden die in entgegengesetzter Drehrichtung liegenden Dämpfungselemente zusammengedrückt und es erfolgt ein mehrmaliges Hin- und Herschwingen des Revolverkopfes, bis dieser zum Stillstand kommt. Während dieses Hin- und Herschwingens werden die Reaktionskräfte von dem Außenring über den Vorpositionierbolzen auf das Gehäuse des Werkzeugrevolvers und umgebende Maschinenteile übertragen. Es treten hierdurch unerwünschte Schwingungen auf, die nicht nur zu einem vorzeitigen Verschleiß von Bauteilen des Werkzeugrevolvers führen, sondern auch andere Maschinenteile beeinflussen und damit unter Umständen auch die Arbeitsgenauigkeit der Maschine, wenn diese beispielsweise beim Weiterschalten des Werkzeugrevolvers mit einem anderen, nicht an diesem Werkzeugrevolver befindlichen Werkzeug arbeitet. Bei dem vorbekannten Werkzeugrevolver erfolgt die Dämpfung erst nachdem der Vorpositionierbolzen in die Sackbohrung eingerastet ist. Dies hat den weiteren Nachteil, daß der Vorpositionierbolzen bei voller Winkelgeschwindigkeit des Außenringes einrastet und dann dieser schlagartig abgebremst wird. Anschließend ist der Vorindexierbolzen auch noch der vorerwähnten Schwingungsbewegung des Revolverkopfes ausgesetzt. Beides führt zu einem erhöhten Verschleiß des Vorindexierbolzens. Außerdem muß dieser mit verhältnismäßig viel Spiel in die Sackbohrung eingreifen, da er sonst bei voller Winkelgeschwindigkeit des Außenringes entweder überhaupt nicht oder nicht genügend tief in die Sackbohrung eindringt. Viel Spiel bei der Vorpositionierung führt jedoch dazu, daß die Verriegelungsteile der Verriegelungsvorrichtung einander nicht genau genug gegenüberstehen und daß der schwere Revolverkopf beim Einrücken der Verriegelungsteile durch diese selbst in die exakte Schaltstellung bewegt werden muß. Hierdurch kann erhöhter Verschleiß an den Verriegelungsteilen auftreten. Da bei dem vorbekannten Werkzeugrevolver die Dämpfung ungenügend ist, ist die Drehgeschwindigkeit des Revolverkopfes begrenzt, da sonst beim Stillsetzen desselben zu große Massenkräfte auftreten. Dies wiederum führt zu einer Verlängerung der Schaltzeit des Revolverkopfes.

Der Erfindung liegt daher die Aufgabe zugrunde, einen Werkzeugrevolver der eingangs erwähnten Art zu schaffen, bei dem durch bessere Dämpfung der Revolverkopf weich und schwingungsfrei unter geringerer Belastung der Bauteile, insbesondere der Vorpositioniereinrichtung, abbremsbar ist, bei dem eine genauere Vorpositionierung gewährleistet ist, und der wegen einer besseren Dämpfung auch eine Erhöhung der Drehgeschwindigkeit des Revolverkopfes beim Weiterschalten ermöglicht.

Dies wird nach der Erfindung dadurch erreicht, daß mit dem Revolverkopf eine Nockenscheibe verbunden ist, die eine der Anzahl der Schaltstellungen entsprechende Anzahl von Nocken mit dazwischenliegenden Nockentälern aufweist, daß als Dämpfungseinrichtung ein hydraulischer Stoßdämpfer vorgesehen ist, welcher zeitweilig mit der Nockenscheibe mittelbar oder unmittelbar zusammenwirkt, und daß die Steuereinrichtung mittels einer Schaltvorrichtung den Stoßdämpfer während eines ersten Teiles der Drehung des Revolverkopfes inaktiviert und während eines zweiten Teiles der Drehung kurz vor Erreichen der angewählten Schaltstellung wieder aktiviert. Durch die Inaktivierung des Stoßdämpfers kann der Revolverkopf rasch in die angewählte Schaltstellung gebracht werden, wobei zwischen der vorherigen Schaltstellung und der angewählten Schaltstellung mehrere mögliche Schaltstellungen liegen können, die jedoch mit maximaler Drehzahl des Revolverkopfes überfahren werden. Der hydraulische Stoßdämpfer kann entsprechend den abzubremsenden Massen des Revolverkopfes und der von ihm getragenen Werkzeuge verhältnismäßig groß ausgelegt werden, wodurch auch in Kombination mit der Verwendung einer Nockenscheibe ein weiches Abbremsen des Revolverkopfes erreicht wird. Hierbei wird im Gegensatz zu der Verwendung von elastischen Dämpfungselementen die kinetische Energie im Stoßdämpfer weitgehend in thermische Energie umgewandelt, so daß keine Energiespeicherung eintritt und damit auch ein Hin- und Herschwingen des Revolverkopfes vermieden wird. Das weiche Abbremsen wird auch dadurch erreicht, daß für die Dämpfung ein verhältnismäßig großer Drehwinkel des Revolverkopfes zur Verfügung steht. Weist der Revolverkopf beispielsweise zwölf Schaltstellungen auf, dann kann der Dämpfungsweg ca. 12° Drehwinkel betragen gegenüber 2 - 3° bei den bekannten Werkzeugrevolvern. Entscheidend ist jedoch, daß bei dem neuen Werkzeugrevolver zunächst der hydraulische Stoßdämpfer wirksam wird und hierdurch die Drehgeschwindigkeit auf Null reduziert wird, bevor der Vorpositionierbolzen in einen entsprechenden Vorpositionierring des Revolverkopfes einrastet. Hierdurch sind die Teile der Vorpositioniereinrichtung praktisch keinem Verschleiß mehr unterworfen. Außerdem kann das Spiel zwischen Vorpositionierbolzen und der hierfür im Vorpositionierring vorgesehenen Ausnehmungen verhältnismäßig klein sein, so daß eine genauere Vorpositionierung erreicht wird. Dies wiederum hat den Vorteil, daß die Verriegelungsteile der Verriegelungseinrichtung einander verhältnismäßig genau gegenüberstehen, so daß auch praktisch keine Drehbewegung des Revolverkopfes mehr erforderlich ist, um diesen in seine exakte Schaltstellung zu bewegen. Infolgedessen tritt auch weniger Verschleiß an den Verriegelungsteilen auf und es ergeben sich auch keine Hin- und Herschwingungen des Revolverkopfes beim Einrücken der Verriegelungsteile. Durch die gute Dämpfung wird der Revolverkopf weich abgebremst und die auf den Werkzeugrevolver selbst sowie umgebende Maschinenteile einwirkenden Reaktionskräfte sind gering. Die Bauteile werden hiermit geschont. Außerdem ermöglicht die gute Dämpfung und das weiche Abbremsen eine höhere Drehgeschwindigkeit des Revolvers beim Weiterschalten, wodurch mehr Bearbeitungszeit zur Verfügung steht und damit die Produktivität der Werkzeugmaschine erhöht wird.

Vorteilhafte Ausgestaltungen der Erfindung sind in den Unteransprüchen gekennzeichnet.

Die Erfindung ist in folgendem, anhand von mehreren in der Zeichnung dargestellten Ausführungsbeispielen näher erläutert.

Es zeigen:

Figur 1     die Draufsicht auf einen Werkzeugrevolver, teilweise im Axialschnitt,

Figur 2     das Schaltbild zu diesem ersten Ausführungsbeispiel,

Figur 3     bis 6 vier verschiedene weitere Ausführungsbeispiele in prinzipieller Darstellung.

Der Werkzeugrevolver weist einen Revolverkopf 1 auf, der in einem stationären Gehäuse 2 um die Drehachse A drehbar gelagert ist. Zum Drehen des Revolverkopfes ist ein Motor 3 vorgesehen, der über ein nicht dargestelltes Getriebe den Revolverkopf 1 in beiden Drehrichtungen antreiben kann. Zur Steuerung dieses Motores 3 und weiterer Funktionen ist eine Steuereinrichtung S vorgesehen. Ferner ist der Revolverkopf 1 gegenüber dem Gehäuse 2 mittels einer Verriegelungsvorrichtung 4, 5 in mehreren vorbestimmten Schaltstellungen, beispielsweise zwölf verschiedenen Schaltstellungen, arretierbar. Da es für die vorliegende Erfindung nicht auf die Ausgestaltung der Verriegelungsvorrichtung ankommt, sind von dieser nur zwei Verriegelungsteile 4, 5 in prinzipieller Darstellung gezeigt. In Wirklichkeit weist die Verriegelungsvorrichtung einen viel komplizierteren Aufbau auf. Es können beispielsweise gemäß DE 31 53 107 C2 und 31 53 112 C2 zwei konzentrisch zueinander angeordnete Stirnverzahnungen vorgesehen sein, von denen eine mit dem Gehäuse und die andere mit dem Revolverkopf fest verbunden ist. Zur gegenseitigen Arretierung der beiden Stirnverzahnungen greift eine weitere Stirnverzahnung, die an einem axial verschiebbaren Verriegelungsglied angeordnet ist, gleichzeitig in beide Stirnverzahnungen ein. Eine andere bekannte Verriegelungseinrichtung, bestehend aus einer mit dem Gehäuse verbundenen Hohlradverzahnung und mehreren in dem Revolverkopf radial verschiebbaren Verriegelungsgliedern, die mit Sperrzähnen in die Hohlradverzahnung eingreifen, ist in der DE 90 12 657 U1 beschrieben. Sämtlichen Verriegelungsvorrichtungen ist gemeinsam, daß Revolverkopf 1 und Gehäuse 2 vor der eigentlichen Verriegelung in eine das gegenseitige Eingreifen der Verriegelungsteile 4, 5 ermöglichende Stellung, hier Vorposition genannt, gebracht werden müssen. Diese Vorpositionierung sollte möglichst genau vorgenommen werden, damit der Revolverkopf 1 bei der eigentlichen Verriegelung nicht mehr oder nur noch möglichst wenig gegenüber dem Gehäuse in seine genaue Schaltstellung gedreht werden muß. Dieses Drehen in die endgültige Schaltstellung erfolgt nämlich allein durch die Verriegelungsteile 4, 5 und kann zu einem erhöhten Verschleiß desselben führen.

Aus diesem Grund ist zur Vorpositionierung eine Vorpositioniereinrichtung vorgesehen, die in der Regel einen in dem Gehäuse 2 in seiner Achsrichtung verschiebbaren Vorpositionierbolzen 6, einen Antrieb hierfür und einen mit dem Revolverkopf 1 verbundenen Vorpositionierring 7 umfaßt. Dieser Vorpositionierring 7 ist mit einer der Anzahl der Schaltstellungen entsprechenden Anzahl von Ausnehmungen oder Sacklochbohrungen 7a versehen. Bei dem gezeigten Ausführungsbeispiel sind dies zwölf Sacklochbohrungen.

Mit dem Revolverkopf 1 ist ferner eine Nockenscheibe (oder Nockenring) 8 fest verbunden, die mit dem Vorpositionierring 7 aus einem Stück bestehen kann. Diese Nockenscheibe 8 weist eine der Anzahl der Schaltstellungen entsprechende Anzahl von zwölf Nocken 9 auf. Diese Nocken erstrecken sich zweckmäßig parallel zur Drehachse A des Revolverkopfes, da hierdurch in radialer Richtung eine besonders gedrängte Bauart erreicht wird. Zwischen den einzelnen Nocken 9 sind Nok-

kentäler 9' ausgebildet. Um in beiden Drehrichtungen gleiche Dämpfungsverhältnisse zu schaffen, weist jeder Nocken 9 zwei Flanken 9a auf, die in beiden Drehrichtungen der Nockenscheibe 8 symmetrisch zum höchsten Punkt 9b des Nockens ansteigen.

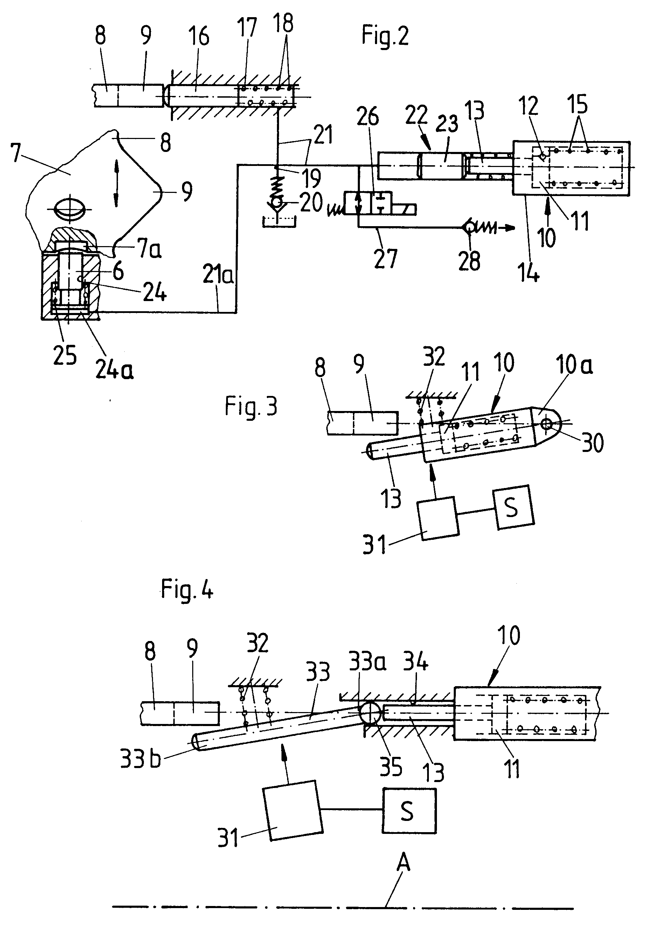

Um den Revolverkopf 1 abzubremsen, bevor der Vorpositionierbolzen 6 in eine der Sacklochbohrungen 7a einrastet, ist gemäß Figur 2 ein hydraulischer Dämpfungszylinder 10 vorgesehen. Dieser hydraulische Dämpfungszylinder 10, im folgenden auch kurz als Stoßdämpfer bezeichnet, weist einen Kolben 11 mit einem darin angeordneten Rückschlagventil 12 auf. Zur Betätigung des Kolbens 11 dient ein Betätigungsglied 13, welches aus dem Gehäuse 14 des hydraulischen Stoßdämpfers herausgeführt ist. Bei dem Stoßdämpfer handelt es sich zweckmäßig um einen Stoßdämpfer mit mehreren Drosselöffnungen. Vorzugsweise wird ein hydraulischer Stoßdämpfer 10 verwendet, der über den Hub des Kolbens 11 eine gleichbleibende (lineare) Gegenkraft aufweist. Es kann jedoch auch ein hydraulischer Stoßdämpfer mit progressiv ansteigender Gegenkraft verwendet werden. Die Abbremsung des Revolverkopfes 1 kann ferner durch die Ausgestaltung der Nocken 9 verbessert werden. Der hydraulische Stoßdämpfer 10 weist ferner eine Rückstellfeder 15 auf, mittels welcher der Kolben 11 und das Betätigungsglied 13 wieder in ihre Ausgangsstellungen zurückstellbar sind.

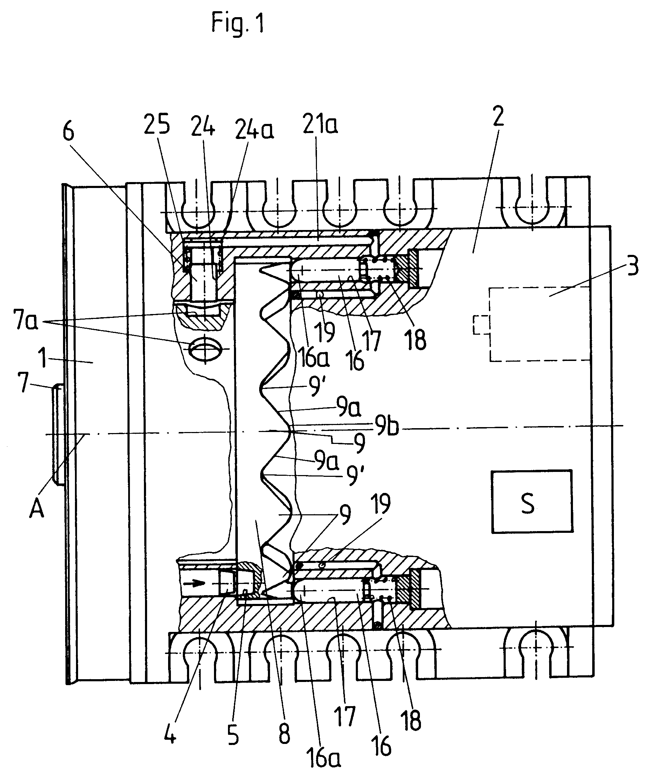

Bei dem in Figur 1 und 2 dargestellten Ausführungsbeispiel wirkt der Stoßdämpfer 10 mittelbar mit den Nocken 9 der Nockenscheibe 8 zusammen. In dem Gehäuse 2 ist mindestens ein als Pumpenkolben 16 ausgebildetes Zwischenglied in einer zur Drehachse A des Revolverkopfes parallelen Zylinderbohrung 17 verschiebbar gelagert. Eine Feder 18 belastet den Pumpenkolben in Richtung zu den Nocken 9 hin. Hierdurch wird das äußere Ende 16a des Pumpenkolbens 16 in ständiger Anlage an den Nocken 9 gehalten. Um eine symmetrische Belastung der Nockenscheibe 8 zu erreichen, sind zweckmäßig zwei Pumpenkolben 16 in zwei in bezug auf die Drehachse A zueinander diametral gegenüberliegenden Zylinderbohrungen 17 vorgesehen. Die Zylinderbohrung 17 ist einerseits über eine Ansaugleitung 19 mit dem unteren Bereich des Gehäuses 2 verbunden. In diesem unteren Bereich ist ein Vorrat von Schmieröl vorhanden. In der Ansaugleitung 19 ist ferner ein Rückschlagventil 20 vorgesehen. Die Zylinderbohrung 17 ist ferner über eine Verbindungsleitung 21 mit einem Hydrozylinder 22 verbunden, dessen Kolben 23 auf das Betätigungsglied 13 einwirkt. Außerdem erstreckt sich ein Zweig 21a der Verbindungsleitung 21 zu einer Zylinderbohrung 24a. in welcher der Vorpositionierbolzen 6 verschiebbar ist.

Auf den Vorpositionierbolzen 6 wirkt eine Feder 25 ein, die den Vorpositionierbolzen 6 in Richtung von dem Vorpositionierring 7 weg belastet. Ferner ist an die Verbindungsleitung 21 ein als Schaltvorrichtung dienendes Wegeventil 26 angeschlossen, welches durch die Steuereinrichtung S steuerbar ist. In Durchgangsstellung ist dieses Wegeventil 26 zweckmäßig an eine Schmierleitung 27 angeschlossen, in welcher ein weiteres Rückschlagventil 28 angeordnet ist. Die Schmierleitung 27 endet an verschiedenen Funktionsteilen des Werkzeugrevolvers, die mit Schmieröl versorgt werden sollen.

Die Wirkungsweise des bisher beschriebenen Werkzeugrevolvers ist folgende:

Um den Revolverkopf 1 von einer vorherigen Schaltstellung in eine neue, angewählte Schaltstellung weiterzudrehen oder weiterzuschalten, wird über die Steuereinrichtung S der Motor 3 in Gang gesetzt. Dieser dreht über das nicht dargestellte Getriebe den Revolverkopf 1 mit höchstmöglicher Geschwindigkeit, wobei die zwischen der vorherigen Schaltstellung und der angewählten Schaltstellung liegenden Schaltstellungen ohne Abbremsen überfahren werden. Während dieses ersten Teiles der Drehung des Revolverkopfes wird der Stoßdämpfer 10 durch die Steuereinrichtung S und das von ihr gesteuerte Wegeventil 26 inaktiviert. Zu diesem Zweck wird das Wegeventil 26 mittels der Steuereinrichtung S in die in Figur 2 dargestellte Stellung gebracht. Während der Drehbewegung des Revolverkopfes 1 werden die durch die Federn 18 an die Nocken 9 angedrückten Pumpenkolben in ihren Zylinderbohrungen 17 hin- und herbewegt. Hierdurch arbeiten sie wie die Pumpenkolben einer Axialkolbenpumpe und saugen über die Ansaugleitung 19 Schmieröl aus dem unteren Teil des Gehäuses 2 an. Dieses Schmieröl wird fast drucklos über die Verbindungsleitung 21 und die Schmierleitung 27 zu den verschiedenen Schmierstellen gefördert. Sowohl der Kolben 23 des Hydrozylinders 22 als auch der Vorpositionierbolzen 6 bleiben in ihrer Ruhestellung, da der geringe Öldruck nicht ausreicht, um die Kraft der Federn 15 und 25 zu überwinden. Wenn nun der Revolverkopf 1 so weit gedreht wurde, daß die äußeren Enden 16a der Pumpenkolben 16 dasjenige Nockental 9' erreicht haben, welches vor dem oder den der angewählten Schaltstellung zugeordneten Nocken 9 liegt (bei dem gezeigten Ausführungsbeispiel sind jeweils zwei Nocken genau einander diametral gegenüberliegend angeordnet, so daß sie gleichzeitig wirken), dann wird dies durch einen nicht dargestellten Drehstellungsgeber der Steuereinrichtung S gemeldet und die Steuereinrichtung aktiviert den hydraulischen Stoßdämpfer 10. Dies erfolgt bei dem in Figur 1 und 2 dargestellten Ausführungsbeispiel dadurch, daß die Steuereinrichtung S das Wegeventil 26 in seine Schließstellung bewegt, in welcher der Durchtritt zur Schmierleitung 27 geschlossen ist. Durch die ansteigenden Flanken 9a der Nocken 9 werden die beiden Pumpenkolben 16 gleichzeitig in ihre Zylinderbohrungen 18 hineingerückt, wodurch sich in der Verbindungsleitung 21 ein Druck aufbaut. Dieser Druck schiebt den Kolben 23 des Hydrozylinders 22 nach rechts und betätigt somit über das Betätigungsglied 13 den Kolben 11 des Stoßdämpfers 10. Dieser bewegt sich nach rechts, wodurch Öl aus dem vor dem Kolben liegenden Raum durch nicht dargestellte Drosselbohrungen verdrängt wird. Die Pumpenkolben 16 können nur in dem Maße in ihre Zylinderbohrungen 17 hineingedrückt werden, wie sich der Kolben 11 des Stoßdämpfers nach rechts verschiebt. Hierdurch üben die Pumpenkolben 16 einen Gegendruck auf die Flanken 9a aus und bremsen hiermit den mit der Nockenscheibe 8 fest verbundenen Revolverkopf 1 weich ab. Gleichzeitig baut sich auch Druck in der Zweigleitung 21a auf, der den Vorpositionierbolzen 6 entgegen der Kraft der Feder 25 in Richtung zum Vorpositionierring 7 hin bewegt. Solange sich der Revolverkopf 1 und damit der Vorpositionierring während der Abbremsung noch drehen, liegt der Vorpositionierbolzen 6 am Außenumfang des Vorpositionierringes 7 an. Die Dämpfungswirkung des hydraulischen Stoßdämpfers kann so eingestellt werden, daß der Revolverkopf 1 auf die Drehgeschwindigkeit Null abgebremst wurde, wenn der höchste Punkt 9b des Nockens 9 den zugehörigen Pumpenkolben 16 erreicht hat. In dieser Stellung, die ziemlich genau der angewählten Schaltstellung des Revolverkopfes 1 entspricht, kann dann der Vorpositionierbolzen 6 in eine der Sackbohrungen 7a einrasten. Da dieses Einrasten bei der Drehgeschwindigkeit Null oder sehr geringer Drehgeschwindigkeit erfolgt, braucht nur wenig Spiel zwischen dem Vorpositionierbolzen 6 und der Sackbohrung 7a vorhanden sein, so daß die Vorpositionierung sehr genau ist. Die Steuereinrichtung S schaltet ferner den Motor 3 ab, sobald der Vorpositionierbolzen 6 eingerastet ist. Wenn anschließend auch die Verriegelungsteile 4, 5 miteinander in Eingriff gebracht wurden, schaltet die Steuereinrichtung S das Wegeventil 26 wieder in seine in Figur 2 dargestellte Durchgangsstellung. Damit wird die Verbindungsleitung 21 drucklos und der Kolben 11 kann unter Wirkung der Rückstellfeder 15 wieder in seine Ausgangsstellung zurückgebracht werden. Desgleichen wird der Vorindexierbolzen 6 durch seine Feder 25 in die in Figur 1 und 2 dargestellte Ausgangsstellung zurückbewegt.

Ein besonderer Vorteil der in Figur 1 und 2 dargestellten Ausführungsform, bei welcher die Wirkverbindung zwischen Nockenscheibe 8 und Stoßdämpfer 10 mittelbar über das beschriebene hydraulische System erfolgt, besteht darin, daß der Stoßdämpfer 10 lageunabhängig zur Nockenscheibe 8 an beliebiger Stelle innerhalb oder außerhalb des Gehäuses 1 angeordnet werden kann. Hierdurch ist eine besonders platzsparende Unterbringung des Stoßdämpfers möglich und man braucht bei der Auslegung des Stoßdämpfers nicht auf bestimmte Raumverhältnisse Rücksicht zu nehmen. Man kann den Stoßdämper allein nach den gewünschten Dämpfungseigenschaften auswählen und damit auch eine gute Abbremsung des Revolverkopfes 1 sicherstellen.

Die in Figur 3 - 6 dargestellten Ausführungsbeispiele unterscheiden sich von dem vorhergehend beschriebenen Ausführungsbeispiel gemäß Figur 1 und 2 lediglich in der Art, wie die Wirkverbindung zwischen der Nockenscheibe 8 und dem hydraulischen Stoßdämpfer 10 ausgebildet ist und wie dieser Stoßdämpfer 10 aktiviert bzw. inaktiviert wird. Teile gleicher Funktion sind daher mit den gleichen Bezugszeichen bezeichnet wie beim vorhergehend beschriebenen Ausführungsbeispiel und obige Beschreibung trifft daher sinngemäß auch auf die Ausführungsbeispiele gemäß Figuren 3 - 6 zu.

Bei dem in Figur 3 dargestellten Ausführungsbeispiel ist der hydraulische Stoßdämper 10 mit seinem der Nockenscheibe 8 abgekehrten Ende 10a um eine quer zur Achse des Stoßdämpfers 10 verlaufende Schwenkachse 30 schwenkbar gelagert. Die Anordnung ist so getroffen, daß das Betätigungsglied 13 des Stoßdämpfers 10 in die Bewegungsbahn der Nocken 9 der Nockenscheibe 8 eingeschwenkt bzw. wieder ausgeschwenkt werden kann. Auf den Stoßdämpfer 10 wirkt eine Feder 32 ein, die den Stoßdämpfer 10 in seiner Ruhestellung hält, in welcher das Betätigungsglied 13 aus der Bewegungsbahn der Nocken 9 ausgeschwenkt und somit der Stoßdämpfer 10 inaktiviert ist. Die Steuereinrichtung S wirkt auf eine Schalteinrichtung 31 beispielsweise in Form eines Elektromagneten ein, der den Stoßdämpfer 10 entgegen der Kraft der Feder 32 so verschwenkt, daß das Betätigungsglied 13 in der Bewegungsbahn der Nocken liegt. Damit ist der hydraulische Stoßdämpfer 10 aktiviert. Das Aktivieren des hydraulischen Stoßdämpfers 10 bzw. das Einschwenken des Betätigungsgliedes 13 erfolgt wie beim ersten Ausführungsbeispiel dann, wenn das Nockental 9', welches in Drehrichtung vor dem der angewählten Schaltstellung zugeordneten Nocken 9 liegt, das Betätigungsglied 13 passiert. Mittels der Schaltvorrichtung 31 kann also die Wirkverbindung zwischen dem Betätigungsglied 13 und der Nockenscheibe 8 ein- und ausgeschaltet werden.

Bei dem in Figur 4 dargestellten Ausführungsbeispiel ist zwischen der Nockenscheibe 8 und dem hydraulischen Stoßdämpfer 10 ein Zwischenglied 33 vorgesehen, welches in einer Führung 34 parallel zur Drehachse A des Revolverkopfes oder senkrecht zu den Nocken 9 verschiebbar ist. Das Zwischenglied 33 ist an seinem der Nockenscheibe 8 abgekehrten Ende 33a um eine quer zu seiner Verschiebeachse verlaufende Schwenkachse 35 schwenkbar. An dem Zwischenglied 33 greift außerdem eine Schaltvorrichtung 31 an, die von der Steuereinrichtung S steuerbar ist und entgegen der Kraft der Feder 32 wirkt. Die Feder 32 hält das Zwischenglied 33 in einer Stellung, in welcher sein der Nockenscheibe 8 zugekehrtes Ende 33b außerhalb des Bewegungsbereiches der Nocke 9 liegt. Auf diese Weise ist die Wirkverbindung zwischen Nockenscheibe 8 und hydraulischem Stoßdämpfer 10 unterbrochen und der hydraulische Stoßdämpfer inaktiviert. Zur Aktivierung des Stoßdämpfers 10 wird mittels der Schalteinrichtung 31 das Zwischenglied 33 entgegen der Kraft der Feder 32 verschwenkt, so daß sein Ende 33b im Bewegungsbereich der Nocken 9 liegt. Hiermit ist die Wirkverbindung zwischen Nockenscheibe 8 und hydraulischem Stoßdämpfer 10 hergestellt und dieser aktiviert. Durch die ansteigende Flanke 9a des der angewählten Schaltstellung zugeordneten Nokkens 9 kann dann das Zwischenglied 33 gemäß Figur 4 nach rechts verschoben werden und bewegt damit das Betätigungsglied 13 und den Kolben 11 des Stoßdämpfers 10 ebenfalls nach rechts, wobei dieser die gewünschte Gegenkraft und Dämpfungswirkung entfaltet.

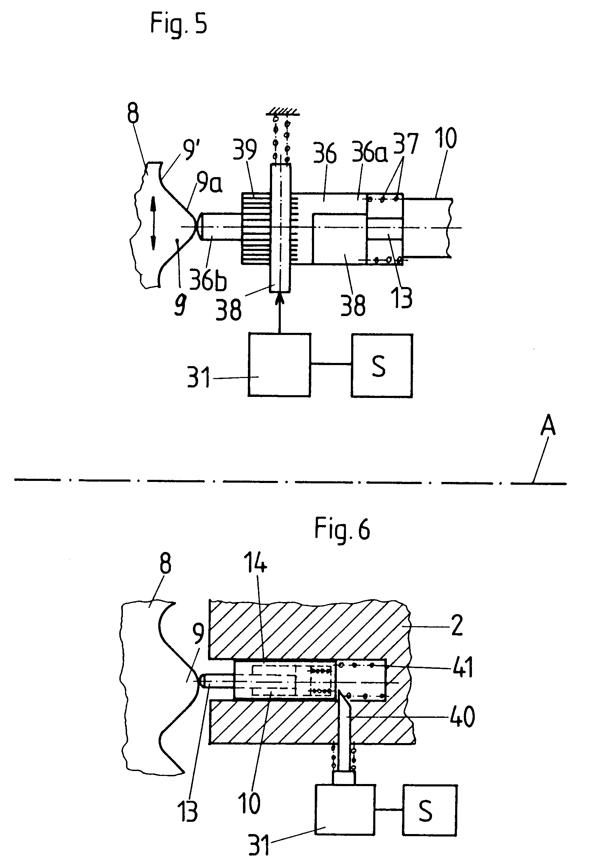

Bei dem in Figur 5 dargestellten Ausführungsbeispiel ist das Zwischenglied 36 parallel zur Drehachse A des Revolverkopfes oder senkrecht zu den Nocken 9 verschiebbar im Gehäuse 2 gelagert. Es ist ferner durch die Feder 37 in Richtung zu den Nocken hin belastet. Das Zwischenglied 36 ist außerdem um seine Achse schwenkbar und weist an seinem dem Betätigungsglied 13 des hydraulischen Stoßdämpfers 10 zugekehrten Ende eine Ausnehmung 38 auf. Die von der Steuereinrichtung S gesteuerte Schaltvorrichtung 31 wirkt über eine Zahnstange 38, die mit einem Ritzel 39 des Zwischengliedes 36 kämmt, auf dieses ein. Je nach Drehstellung des Zwischengliedes 36 kommt dadurch sein Ende 36a oder seine Ausnehmung 38 in dem Bereich des Betätigungsgliedes 13 zu liegen. In ersterem Fall, der in Figur 5 dargestellt ist, ist der hydraulische Stoßdämpfer aktiviert, in letzterem Fall inaktiviert. In der inaktivierten Stellung liegt die Ausnehmung 38 im Bereich des Betätigungsgliedes 13. Das Zwischenglied 36, das durch die Feder 37 mit seinem Taststift 36b in Anlage an den Nocken 9 gehalten wird, folgt während der Drehbewegung der Nockenscheibe 8 jeweils dem Verlauf der Nocke 9. Wenn der Taststift 36b das Nockental 9' erreicht hat, welches vor dem Nocken 9 liegt, der der angewählten Schaltstellung zugeordnet ist, dann wird mittels der Schaltvorrichtung 31 und die Zahnstange 38 das Zwischenglied 36 um seine Achse geschwenkt und damit sein Ende 36a in den Bereich des Betätigungsgliedes 13 gebracht. Damit ist der Stoßdämpfer 10 aktiviert und kann unter Zwischenschaltung des Zwischengliedes 36 die Nockenscheibe 8 und damit den Revolverkopf 1 abbremsen, wenn der Taststift 36b vom Nockental 9' aus durch die Flanke 9a nach rechts in die in Figur 5 dargestellte Stellung verschoben wird.

Bei dem in Figur 6 dargestellten Ausführungsbeispiel ist der gesamte Stoßdämpfer 10 parallel zu der Drehachse A des Revolverkopfes oder senkrecht zu den Nocken 9 verschiebbar im Gehäuse 2 gelagert. Die Feder 41 drückt den Stoßdämpfer 10 in Richtung zu den Nocken 9 hin und hält damit das Betätigungsglied 13 in Anlage an den Nocken. Ferner ist ein Sperriegel 40 vorgesehen, der durch die Schalteinrichtung 31 nach Maßgabe der Steuereinrichtung S betätigbar ist. Dieser Sperriegel 40 wirkt mit dem Stoßdämpfer 10 zusammen. Befindet sich der Sperriegel 40 außerhalb der Bewegungsbahn des Stoßdämpfers 10 in seiner entriegelten Stellung, dann wird das Betätigungsglied 13 durch die Nocken 9 hin- und herbewegt und nimmt damit auch den Stoßdämpfer 10 bzw. dessen Gehäuse 14 mit. Der Stoßdämpfer 10 wird dann im Gehäuse 2 einfach entgegen der Kraft der Feder 41 hin- und herbewegt. Die Kraft der Feder 41 ist wesentlich schwächer als die im Stoßdämpfer vorgesehene Rückstellfeder, so daß der Stoßdämpfer bei entriegeltem Sperriegel 40 nicht wirksam ist. Zur Aktivierung des Stoßdämpfers wird der Sperriegel 40 mittels der Schaltvorrichtung 31 in seine in Figur 6 dargestellte Sperrstellung gebracht, in welcher er in der Bewegungsbahn des Stoßdämpfers 10 liegt und damit dessen Bewegung gegenüber dem Gehäuse 2 blockiert. Damit ist der Stoßdämpfer aktiviert und das Betätigungsglied 13 kann entgegen dem Druck des im Stoßdämpfergehäuse 14 befindlichen Öles in das Stoßdämpfergehäuse hineingedrückt werden, wobei der Stoßdämpfer seine Gegenkraft und damit seine Dämpfungswirkung entfaltet.

**Patentansprüche**

1. Werkzeugrevolver, mit einem Gehäuse, mit einem hierin drehbar und durch einen Motor antreibbar gelagerten Revolverkopf, mit einer Verriegelungsvorrichtung, mittels welcher der Revolverkopf gegenüber dem Gehäuse in jeweils einer von mehreren vorbestimmten Schaltstellungen arretierbar ist, mit einer Vorpositioniereinrichtung, mittels welcher der Revolverkopf beim Erreichen einer angewählten Schaltstellung in einer das gegenseitige Eingreifen von Verriegelungsteilen der Verriegelungsvorrichtung ermöglichenden Stellung (Vorposition) stillsetzbar ist, mit einer beim Stillsetzen des Revolverkopfes wirksam werdenden Dämpfungseinrichtung und mit einer Steuereinrichtung, welche kurz vor Erreichen der angewählten Schaltstellung die Vorpositioniereinrichtung aktiviert und beim Erreichen der Vorposition den Motor abschaltet, **dadurch gekennzeichnet**, daß mit dem Revolverkopf (1) eine Nockenscheibe (8) verbunden ist, die eine der Anzahl der Schaltstellungen entsprechende Anzahl von Nocken (9) mit dazwischenliegenden Nockentälern (9') aufweist, daß als Dämpfungseinrichtung ein hydraulischer Stoßdämpfer (10) vorgesehen ist, welcher zeitweilig mit der Nockenscheibe (9) mittelbar oder unmittelbar zusammenwirkt, und daß die Steuereinrichtung (S) mittels einer Schaltvorrichtung (26, 31) den Stoßdämpfer (10) während eines ersten Teiles der Drehung des Revolverkopfes (1) inaktiviert und während eines zweiten Teiles der Drehung kurz vor Erreichen der angewählten Schaltstellung wieder aktiviert.

2. Werkzeugrevolver nach Anspruch 1, **dadurch gekennzeichnet**, daß der Stoßdämpfer (10) ein mittelbar oder unmittelbar mit der Nockenscheibe (8) zusammenwirkendes Betätigungsglied (13) aufweist und daß die Wirkverbindung zwischen diesen und der Nockenscheibe (8) mittels der Schaltvorrichtung (26, 31) ein- und ausschaltbar ist.

3. Werkzeugrevolver nach Anspruch 1 oder 2, **dadurch gekennzeichnet**, daß die Steuereinrichtung (S) die Wirkverbindung zwischen Nockenscheibe (8) und Betätigungsglied (13) wieder einschaltet, wenn das Nockental (9'), welches in Drehrichtung vor dem der angewählten Schaltstellung zugeordneten Nocken (9) liegt, das Betätigungsglied (13) oder ein an der Nockenscheibe (8) anliegendes, mittelbar auf das Betätigungsglied einwirkendes Zwischenglied (16, 33, 36) passiert.

4. Werkzeugrevolver nach Anspruch 1, 2 oder 3, **dadurch gekennzeichnet**, daß jeder Nocken (9) in beiden Drehrichtungen der Nockenscheibe (8) zum höchsten Punkt (9b) des Nockens (9) hin symmetrisch ansteigende Flanken (9a) aufweist.

5. Werkzeugrevolver nach einem der Ansprüche 1 - 4, **dadurch gekennzeichnet**, daß der Stoßdämpfer (10) eine Rückstellfeder (15) aufweist, mittels welcher er mit seinem Betätigungsglied (13) wieder in seine Ausgangsstellung zurückstellbar ist.

6. Werkzeugrevolver nach einem der Ansprüche 1 - 5, **dadurch gekennzeichnet**, daß der Kolben (11) des Stoßdämpfers (10) mindestens ein Rückschlagventil (12) aufweist, welches bei der Bewegung des Kolbens (11) entgegen der Kraft der Rückstellfeder (15) schließt.

7. Werkzeugrevolver nach Anspruch 6, **dadurch gekennzeichnet**, daß der Stoßdämpfer (10) eine über den Hub des Kolbens (11) gleichbleibende (lineare) Gegenkraft aufweist.

8. Werkzeugrevolver nach einem der Ansprüche 3 - 7, **dadurch gekennzeichnet**, daß das Zwischenglied ein in Richtung zu den Nocken (9) hin federbelasteter, in einer

Zylinderbohrung (17) des Gehäuses (2) senkrecht zu den Nocken (9) verschiebbarer Pumpenkolben (16) ist, dessen äußeres Ende (16a) ständig an der Nockenscheibe (8) anliegt, daß die Zylinderbohrung (17) einerseits über eine mit einem Rückschlagventil (20) versehene Ansaugleitung (19) mit dem unteren Bereich des Gehäuses (2) und andererseits über eine Verbindungsleitung (21) mit einem auf das Betätigungsglied (13) des Stoßdämpfers (10) einwirkenden Hydrozylinder (22) verbunden ist, und daß in der Verbindungsleitung (21) als Schaltvorrichtung ein von der Steuereinrichtung (S) steuerbares Wegeventil (26) vorgesehen ist, welches den Druck in der Verbindungsleitung (21) steuert.

9. Werkzeugrevolver nach Anspruch 8, **dadurch gekennzeichnet**, daß zwei Pumpenkolben (16) in zwei in bezug auf die Drehachse (A) des Revolverkopfes (1) zueinander diametral gegenüberliegenden Zylinderbohrungen (17) vorgesehen sind.

10. Werkzeugrevolver nach einem der Ansprüche 2 - 7, **dadurch gekennzeichnet**, daß der Stoßdämpfer (10) um eine quer zu seiner Achse verlaufende Schwenkachse (30) schwenkbar gelagert ist und daß die Schaltvorrichtung (31) am Stoßdämpfer (10) angreift und sein Betätigungsglied (13) nach Maßgabe der Steuereinrichtung (S) in die Bewegungsbahn der Nocken (9) ein- und ausschwenkbar ist.

11. Werkzeugrevolver nach einem der Ansprüche 3 - 7, **dadurch gekennzeichnet**, daß das Zwischenglied (33) parallel zur Drehachse (A) des Revolverkopfes (1) oder senkrecht zu den Nocken (9) verschiebbar sowie um eine quer zu seiner Verschiebeachse verlaufende Schwenkachse (35) schwenkbar ist und daß die Schaltvorrichtung (31) am Zwischenglied (33) angreift, mittels welcher sein den Nocken (9) zugekehrtes Ende (33b) nach Maßgabe der Steuereinrichtung (S) in die Bewegungsbahn der Nocken (9) ein- und ausschwenkbar ist.

12. Werkzeugrevolver nach einem der Ansprüche 3 - 7, **dadurch gekennzeichnet**, daß das Zwischenglied (36) parallel zur Drehachse (A) des Revolverkopfes (1) verschiebbar und in Richtung zu den Nocken (9) hin federbelastet ist, daß das Zwischenglied (36) um eine in seiner Verschieberichtung verlaufende Achse schwenkbar ist und an seinem dem Betätigungsglied (13) des Stoßdämpfers (10) zugekehrten Ende (36a) eine Ausnehmung (38) aufweist, und daß die Schaltvorrichtung (31) drehend am Zwischenglied (36) angreift und dieses nach Maßgabe der Steuereinrichtung (S) um seine Achse dreht, um damit wechselweise sein Ende (36a) oder eine dortige Ausnehmung (37) in den Bereich des Betätigungsgliedes (13) zu drehen.

13. Werkzeugrevolver nach einem der Ansprüche 2 - 7, **dadurch gekennzeichnet**, daß der gesamte Stoßdämpfer (10) parallel zu der Drehachse (A) des Revolverkopfes (1) oder senkrecht zu den Nocken (9) verschiebbar im Gehäuse (1) gelagert und in Richtung zur Nockenscheibe (8) hin federbelastet ist, daß sein Betätigungsglied (13) ständig an der Nockenscheibe (8) anliegt, und daß die Schaltvorrichtung (31) an einem Sperrriegel (40) angreift, welcher durch die Schaltvorrichtung (31) nach Maßgabe der Steuervorrichtung (S) in die Bewegungsbahn des Stoßdämpfers (10) bewegbar ist und damit dessen Verschiebebewegung gegenüber dem Gehäuse (2) blockiert.

14. Werkzeugrevolver nach Anspruch 8 oder 9, **dadurch gekennzeichnet**, daß die Vorpositioniereinrichtung einen entgegen einer Feder (25)verschiebbaren Vorpositionierbolzen (6) aufweist, daß dieser als ein Kolben ausgebildet ist, der in einer Zylinderbohrung (24) verschiebbar ist und daß ein Druckraum (24a) dieser Zylinderbohrung (24) an die Verbindungsleitung (21) angeschlossen ist.

15. Werkzeugrevolver nach mindestens einem der vorhergehenden Ansprüche, **dadurch gekennzeichnet**, daß sich die Nocken (9) parallel zur Drehachse (A) des Revolverkopfes (1) erstrecken.

16. Werkzeugrevolver nach mindestens einem der vorhergehenden Ansprüche, **dadurch gekennzeichnet**, daß der

Stoßdämpfer (10) durch die Steuereinrichtung (S) und die Schalteinrichtung (26, 31) inaktivierbar ist, sobald der Vorpositionierbolzen (6) und die Verriegelungsteile (4, 5) eingerastet sind.

Fig. 1

Fig. 2

Fig. 3

Fig. 4

Fig. 5

Fig. 6